# EUROPEAN PATENT APPLICATION

(11) **EP 4 424 167 A1**
(43) Date of publication of application: **04.09.2024**
(21) Application number: 22886701.6
(22) Date of filing: 12.10.2022
(51) Int. Cl.: A01N 43/80, A01C 1/08, A01N 25/00, A01N 25/04, A01P 3/00

(54) **AQUEOUS AGROCHEMICAL SUSPENSION COMPOSITION, PLANT DISEASE CONTROL METHOD, AND SEED OF USEFUL PLANT**

(30) Priority: 29.10.2021 JP 2021177425
(71) Applicant: Kumiai Chemical Industry Co., Ltd., Taito-ku Tokyo 110-8782 (JP)
(72) Inventor: AMANO Naruki, Tokyo 110-8782 (JP)
(74) Representative: Vossius & Partner Patentanwälte Rechtsanwälte mbB
(86) International application number: PCT/JP2022/038055
(87) International publication number: WO 2023/074372

(57) **Abstract**

To provide an aqueous suspension agrochemical composition containing dichlobentiazox, an oil which is a vegetable oil or a vegetable oil derivative, and water, a disease control method in which the aqueous suspension agrochemical composition is applied to surfaces of seeds of a useful plant, and a seed of a useful plant treated with the aqueous suspension agrochemical composition.

## Description

### TECHNICAL FIELD

The present invention relates to an aqueous suspension agrochemical composition containing dichlobentiazox, and more particularly to an aqueous suspension agrochemical composition containing dichlobentiazox and optimized for use in a seed treatment.

### BACKGROUND ART

As one of treatment methods with agrochemicals, a seed treatment in which seeds are directly treated with an agrochemical has been put into practical use. The treatment with agrochemicals after seeding can be omitted by purchasing chemically treated seeds in advance, so that the seed treatment greatly contributes to labor saving in agriculture.

Currently, flowable formulations, wettable powders, granular wettable powders, emulsions, and the like are used as agrochemical formulations for a seed treatment (Patent Literature 1). However, in the case of a formulation in which an agrochemical active ingredient is present as a solid, dust containing the agrochemical active ingredient may peel off from seeds treated with the agrochemical, and an operator who sows the seeds may be exposed to the agrochemical active ingredient.

As a technique of preventing the generation of such dust, for example, a method is known in which a water-soluble synthetic polymer such as polyvinyl pyrrolidone and polyvinyl alcohol is mixed in advance with an agrochemical formulation or added during a treatment, and a force of supporting an agrochemical active ingredient on a seed surface is increased (Patent Literature 2).

Among the dosage forms of the above-described agrochemical formulations, the flowable formulation has high safety for an operator performing treatments with agrochemicals because of no dust. Furthermore, a flowable formulation containing an agrochemical active ingredient at a high concentration is superior to a flowable formulation containing the agrochemical active ingredient at a low concentration in that the product can be provided to an operator at low cost due to a reduction in cost required for production, storage, and transportation.

3-(3,4-dichloroisothiazol-5-ylmethoxy)-1,2-benzothiazole-1,1 -dioxide, that is, dichlobentiazox is a known active ingredient for controlling diseases of agricultural and horticultural plants, and exhibits a remarkable effect on diseases such as rice blast, glume blotch, cucumber downy mildew, and cucumber anthracnose (Patent Document 3).

However, dichlobentiazox is a chemically slightly unstable compound, and the decomposition thereof may be unnecessarily promoted in the presence of various chemical substances. Dichlobentiazox has a poor compatibility with the water-soluble synthetic polymer used in the above prior art, and when the water-soluble synthetic polymer is mixed with the aqueous suspension agrochemical composition containing dichlobentiazox, decomposition of dichlobentiazox over time is promoted.

Therefore, in the case of a flowable formulation containing dichlobentiazox, particularly in the case of the flowable formulation used for the seed treatment, it has been difficult to obtain an agrochemical formulation which can prevent generation of dust from seeds treated with the flowable formulation and has excellent storage stability.

### CITATION LIST

### PATENT LITERATURE

Patent Literature 1: JP-T-2008-538760
Patent Literature 2: JP-T-2010-535736
Patent Literature 3: WO 2007/129454

### SUMMARY OF INVENTION

### TECHNICAL PROBLEM

An object of the present invention is to provide an aqueous suspension agrochemical composition which contains dichlobentiazox with excellent storage stability and can prevent dust generated from seeds after a seed treatment when used for the seed treatment.

### SOLUTION TO PROBLEM

As a result of studies to solve the above problems, the present inventors have found that when an aqueous suspension agrochemical composition containing dichlobentiazox contains an oil which is a vegetable oil or a vegetable oil derivative, decomposition of dichlobentiazox can be reduced to a slight extent, and dust generated from seeds after a seed treatment can be prevented when the composition is used for the seed treatment, and have completed the present invention.

That is, the present invention has the following contents.

[1] An aqueous suspension agrochemical composition containing dichlobentiazox, an oil which is a vegetable oil or a vegetable oil derivative, and water.
[2] The composition described in [1] above, in which the oil is castor oil or a castor oil derivative.
[3] The composition described in [1] or [2] above, in which the oil has a viscosity at 20°C of 300 mPa.s to 1000 mPa·s.
[4] The composition described in any one of [1] to [3] above, in which dichlobentiazox is contained in an amount of 20 mass% to 55 mass%.
[5] The composition described in any one of [1] to [4] above, in which the oil is contained in an amount of 2 mass% to 8 mass%.
[6] The composition described in any one of [1] to [5] above, which has a viscosity at 20°C of 200 mPa-s to 800 mPa·s.
[7] The composition described in any one of [1] to [6] above, in which a water-soluble synthetic polymer is not contained at all, or a total content of the water-soluble synthetic polymer is less than 1 mass%.
[8] The composition described in any one of [1] to [7] above, further containing gum arabic.
[9] The composition described in any one of [1] to [8] above, which is a seed treatment agent.
[10] The composition described in [9] above, in which an amount of dust generated when seeds of a useful plant which are treated with a water-diluted solution of the aqueous suspension agrochemical composition are rolled is 75 mass% or less of an amount of dust generated when seeds treated with a water-diluted solution of a control composition containing water instead of oil are rolled.
[11] A disease control method including: treating surfaces of seeds of a useful plant with an aqueous suspension agrochemical composition containing dichlobentiazox, an oil which is a vegetable oil or a vegetable oil derivative, and water, in which occurrence of a disease in a subsequent cultivation process of the useful plant is prevented.
[12] A seed of a useful plant, the seed having a surface on which dichlobentiazox and oil which is a vegetable oil or a vegetable oil derivative are supported.

### ADVANTAGEOUS EFFECT

According to the present invention, it is possible to obtain an aqueous suspension agrochemical composition which contains dichlobentiazox and can prevent dust generated from seeds after a seed treatment when used in the seed treatment.

### DESCRIPTION OF EMBODIMENTS

An aqueous suspension agrochemical composition in an embodiment of the present invention (hereinafter, sometimes simply referred to as "agrochemical composition") is obtained by suspending, in water, an agrochemical active ingredient and an oil which is a vegetable oil or a vegetable oil derivative.

In the present embodiment, dichlobentiazox is mixed with the agrochemical composition as the agrochemical active ingredient. A mixing ratio of dichlobentiazox is not particularly limited, and is usually in the range of 1 mass% to 60 mass%, preferably 20 mass% to 55 mass%, and more preferably 30 mass% to 50 mass% in the agrochemical composition. In particular, with an agrochemical composition containing dichlobentiazox at a high concentration, for example, an agrochemical composition containing 20 mass% or more of dichlobentiazox, and further with an agrochemical composition containing 30 mass% or more of dichlobentiazox, advantageous effects of the present embodiment are remarkable.

In the agrochemical composition of the present embodiment, an additional agrochemical active ingredient may be mixed together with dichlobentiazox. The additional agrochemical active ingredient is not particularly limited, and disease control active ingredients, pest control active ingredients (including insecticidal active ingredients, acaricidal active ingredients, and nematicidal active ingredients), herbicidal active ingredients, and plant growth regulatory active ingredients can be contained as the additional agrochemical active ingredient.

When the disease control active ingredients are contained as the additional agrochemical active ingredient, one kind of the disease control active ingredients may be used alone, or any two or more kinds thereof may be used in combination. Examples of the disease control active ingredients include, but are not limited to, azaconazole, acibenzolar-S-methyl, azoxystrobin, anilazine, amisulbrom, aminopyrifen, ametoctradin, aldimorph, isotianil, isopyrazam, isofetamid, isoflucypram, isoprothiolane, ipconazole, ipflufenoquin, ipfentrifluconazole, iprodione, iprovalicarb, iprobenfos, imazalil, iminoctadine-trialbesilate, iminoctadine-triacetate, imibenconazole, inpyrfluxam, imprimatinA, imprimatin B, edifenphos, etaconazole, ethaboxarn, ethirimol, ethoxyquin, etridiazole, enestroburin, enoxastrobin, epoxiconazole, organic oils, oxadixyl, oxazinylazole, oxathiapiprolin, oxycarboxin, oxine-copper, oxytetracycline, oxpoconazole-fumarate, oxolinic acid, copper dioctanoate, octhilinone, ofurace, orysastrobin, o-phenylphenol, kasugamycin, captafol, carpropamid, carbendazim, carboxin, carvone, quinoxyfen, quinofumelin, chinomethionat, captan, quinconazole, quintozene, guazatine, cufraneb, coumoxystrobin, kresoxim-methyl, clozylacon, chlozolinate, chlorothalonil, chloroneb, cyazofamid, diethofencarb, diclocymet, dichlofluanid, diclomezine, dicloran, dichlorophen, dithianon, diniconazole, diniconazole-M, zineb, dinocap, dipymetitrone, diphenylamine, difenoconazole, cyflufenamid, diflumetorim, cyproconazole, cyprodinil, simeconazole, dimethirimol, dimethyl disulfide, dimethomorph, cymoxanil, dimoxystrobin, ziram, silthiofam, streptomycin, spiroxamine, sedaxane, zoxamide, dazomet, tiadinil, thiabendazole, thiram, thiophanate, thiophanate-methyl, thifluzamide, tecnazene, tecloftalam, tetraconazole, debacarb, tebuconazole, tebufloquin, terbinafine, dodine, dodemorph, triadimenol, triadimefon, triazoxide, trichlamide, triclopyricarb, tricyclazole, triticonazole, tridemorph, triflumizole, trifloxystrobin, triforine, tolylfluanid, tolclofos-methyl, tolnifanide, tolprocarb, nabam, natamycin, naftifine, nitrapyrin, nitrothal-isopropyl, nuarimol, copper nonyl phenol sulphonate, Bacillus subtilis (strain: QST 713), validamycin, valifenalate, picarbutrazox, bixafen, picoxystrobin, pydiflumetofen, bitertanol, binapacryl, biphenyl, piperalin, hymexazol, pyraoxystrobin, pyraclostrobin, pyraziflumid, pyrazophos, pyrapropoyne, pyrametostrobin, pyriofenone, pyrisoxazole, pyridachlometyl, pyrifenox, pyributicarb, pyribencarb, pyrimethanil, pyroquilon, vinclozolin, ferbam, famoxadone, phenazine oxide, fenamidone, fenaminstrobin, fenarimol, fenoxanil, ferimzone, fenpiclonil, fenpicoxamid, fenpyrazamine, fenbuconazole, fenfuram, fenpropidin, fenpropimorph, fenhexamid, folpet, phthalide, bupirimate, fuberidazole, blasticidin-S, furametpyr, furalaxyl, furancarboxylic acid, fluazinam, fluindapyr, fluoxastrobin, fluoxapiprolin, fluopicolide, fluopimomide, fluopyram, fluoroimide, fluxapyroxad, fluquinconazole, furconazole, furconazole-cis, fludioxonil, flusilazole, flusulfamide, flutianil, flutolanil, flutriafol, flufenoxystrobin, flumetover, flumorph, proquinazid, prochloraz, procymidone, prothiocarb, prothioconazole, bronopol, propamocarb-hydrochloride, propiconazole, propineb, probenazole, bromuconazole, flometoquin, florylpicoxamid, hexaconazole, benalaxyl, benalaxyl-M, benodanil, benomyl, pefurazoate, penconazole, pencycuron, benzovindiflupyr, benthiazole, benthiavalicarb-isopropyl, penthiopyrad, penflufen, boscalid, fosetyl (alminium, calcium, sodium), polyoxin, polycarbamate, Bordeaux mixture, mancozeb, mandipropamid, mandestrobin, maneb, myclobutanil, mineral oils, mildiomycin, methasulfocarb, metam, metalaxyl, metalaxyl-M, metiram, metyltetraprole, metconazole, metominostrobin, metrafenone, mepanipyrim, mefentrifluconazole, meptyldinocap, mepronil, iodocarb, laminarin, phosphorous acid and salts, copper oxychloride, silver, cuprous oxide, copper hydroxide, potassium bicarbonate, sodium bicarbonate, sulfur, oxyquinoline sulfate, copper sulfate, (3,4-dichloroisothiazol-5-yl)methyl 4-(tert-butyl)benzoate (chemical name, CAS registry number: 1231214-23-5), BAF-045 (code number), BAG-010 (code number), UK-2A (code number), DBEDC (Dodecylbenzenesulfonic acid bisethylenediamine copper complex salt [II]), MIF-1002 (code number), NF-180 (code number), TPTA (triphenyltin acetate), TPTC (triphenyltin chloride), TPTH (triphenyltin hydroxide), and nonpathogenic Erwinia carotovora. Here, the code number means a development number used in each company.

When the pest control active ingredients are contained as the additional agrochemical active ingredient, one kind of the pest control active ingredients may be used alone, or any two or more kinds thereof may be used in combination. Examples of the pest control active ingredients include, but are not limited to, acrinathrin, azadirachtin, azamethiphos, azinphosethyl, azinphos-methyl, acequinocyl, acetamiprid, acetoprole, acephate, azocyclotin, abamectin, afidopyropen, afoxolaner, amidoflumet, amitraz, alanycarb, aldicarb, aldoxycarb, allethrin (including d-cis-body and d-trans-body), isazophos, isamidofos, isocarbophos, isoxathion, isocycloseram, isofenphos-methyl, isoprocarb, ivermectin, imicyafos, imidacloprid, imiprothrin, indoxacarb, esfenvalerate, ethiofencarb, ethion, ethiprole, ethylene dibromide, etoxazole, etofenprox, ethoprophos, etrimfos, emamectin benzoate, endosulfan, empenthrin, oxazosulfyl, oxamyl, oxydemeton-methyl, oxydeprofos, omethoate, cadusafos, kappa-tefluthrin, kappa-bifenthrin, kadethrin, karanjin, cartap, carbaryl, carbosulfan, carbofuran, gamma-BHC, xylylcarb, quinalphos, kinoprene, chinomethionat, coumaphos, cryolite, clothianidin, clofentezine, chromafenozide, chlorantraniliprole, chlorethoxyfos, chlordane, chloropicrin, chlorpyrifos, chlorpyrifos-methyl, chlorfenapyr, chlorfenvinphos, chlorfluazuron, chlormephos, chloroprallethrin, cyanophos, diafenthiuron, diamidafos, cyantraniliprole, dienochlor, cyenopyrafen, dioxabenzofos, diofenolan, cyclaniliprole, dicrotophos, dichlofenthion, cycloprothrin, dichlorvos, dicloromezotiaz, 1,3-dichloropropene, dicofol, dicyclanil, disulfoton, dinotefuran, dinobuton, cyhalodiamide, cyhalothrin (including gamma-body and lambda-body), cyphenothrin [including (1R)-trans-body], cyfluthrin (including beta-body), diflubenzuron, cyflumetofen, diflovidazin, cyhexatin, cypermethrin (including alpha-body, beta-body, theta-body, and zeta-body), dimpropyridaz, dimethylvinphos, dimefluthrin, dimethoate, silafluofen, cyromazine, spinetoram, spinosad, spirodiclofen, spirotetramat, spiropidion, spiromesifen, sulcofuron-sodium, sulfluramid, sulfoxaflor, sulfotep, diazinon, thiacloprid, thiamethoxam, tioxazafen, thiodicarb, thiocyclam, thiosultap, thionazin, thiofanox, thiometon, tyclopyrazoflor, tetrachlorantraniliprole, tetrachlorvinphos, tetradifon, tetraniliprole, tetramethylfluthrin, tetramethrin, tebupirimfos, tebufenozide, tebufenpyrad, tefluthrin, teflubenzuron, demeton-S-methyl, temephos, deltamethrin, terbufos, tralomethrin, transfluthrin, triazamate, triazophos, trichlorfon, triflumuron, triflumezopyrim, trimethacarb, tolfenpyrad, naled, nitenpyram, novaluron, noviflumuron, Verticillium lecanii, hydroprene, Pasteuriapenetrans, vamidothion, parathion, parathion-methyl, halfenprox, halofenozide, bioallethrin, bioallethrin S-cyclopentenyl, bioresmethrin, bistrifluron, hydramethylnon, bifenazate, bifenthrin, pyflubumide, piperonyl butoxide, pymetrozine, pyraclofos, pyrafluprole, pyridaphenthion, pyridaben, pyridalyl, pyrifluquinazon, pyriprole, pyriproxyfen, pirimicarb, pyrimidifen, pyriminostrobin, pirimiphos-methyl, pyrethrine, famphur, fipronil, fenazaquin, fenamiphos, fenitrothion, fenoxycarb, fenothiocarb, phenothrin [including (1R)-trans-body], fenobucarb, fenthion, phenthoate, fenvalerate, fenpyroximate, fenbutatin oxide, fenpropathrin, fonofos, sulfuryl fluoride, butocarboxim, butoxycarboxim, buprofezin, furathiocarb, prallethrin, fluacrypyrim, fluazaindolizine, fluazuron, fluensulfone, sodium fluoroacetate, fluxametamide, flucycloxuron, flucythrinate, flusulfamide, fluvalinate (including tau-body), flupyradifurone, flupyrazofos, flupyrimin, flufiprole, flufenerim, flufenoxystrobin, flufenoxuron, fluhexafon, flubendiamide, flumethrin, fluralaner, prothiofos, protrifenbute, flonicamid, propaphos, propargite, profenofos, broflanilide, brofluthrinate, profluthrin, propetamphos, propoxur, flometoquin, bromopropylate, hexythiazox, hexaflumuron, Paecilomyces tenuipes, Paecilomyces fumosoroseus, heptafluthrin, heptenophos, permethrin, benclothiaz, benzpyrimoxan, bensultap, benzoximate, bendiocarb, benfuracarb, Beauveria tenella, Beauveria bassiana, Beauveria brongniartii, phoxim, phosalone, fosthiazate, fosthietan, phosphamidon, phosmet, polynactins, formetanate, phorate, malathion, milbemectin, mecarbam, mesulfenfos, methoprene, methomyl, metaflumizone, methamidophos, metham, methiocarb, methidathion, methyl isothiocyanate, methyl bromide, methoxychlor, methoxyfenozide, methothrin, metofluthrin, epsilon-metofluthrin, metolcarb, mevinphos, meperfluthrin, Monacrosporium phymatophagum, monocrotophos, momfluorothrin, epsilon-momfluorothrin, litlure-A, litlure-B, aluminium phosphide, zinc phosphide, phosphine, lufenuron, rescalure, resmethrin, lepimectin, rotenone, fenbutatin oxide, calcium cyanide, nicotinesulfate, (Z)-11-tetradecenyl acetate, (Z)-11-hexadecenal, (Z)-11-hexadecenyl acetate, (Z)-9,12-tetradecadienyl acetate, (Z)-9-tetradecene-1-ol, (Z,E)-9,11-tetradecadienyl acetate, (Z,E)-9,12-tetradecadienyl acetate, Bacillus popilliae, Bacillus subtillis, Bacillus sphaericus, Bacillus thuringiensis subsp. Aizawai, Bacillus thuringiensis subsp. Israelensis, Bacillus thuringiensis subsp. Kurstaki, Bacillus thuringiensis subsp. Tenebrionis, Bt (Bacillus thuringiensis) protein (Cry1Ab, Cry1Ac, Cry 1 Fa, Cry2Ab, mCry3A, Cry3Ab, Cry3Bb, Cry34/35Ab1), CL900167 (code number), DCIP (bis-(2-chloro-1)-methylethyl ether), DDT (1,1,1-trichloro-2,2-bis(4-chlorophenyl)ethane), DEP (dimethyl-2,2,2-trichloro-1-hydroxyethylphosphonate), DNOC (4,6-dinitro-o-cresol), DSP (O,O-diethyl-O-[4-(dimethylsulfamoyl)phenyl]-phosphorothioate), EPN (O-ethyl-O-4-(nitrophenyl)phenylphosphonothioate), nuclear Polyhedrosis Virus Embedded Body, NA-85 (code number), NA-89 (code number), NC-515 (code number), RU15525 (code number), XMC, Z-13-icosen-10-one, ZXI8901 (code number), 1-chloro-5-fluoro-2-[(2,2,2-trifluoroethyl)sulfinyl]-4-[[5-[(trifluoromethyl)thio]pentyl]oxy]benzene (chemical name, CAS registry number: 1472050-04-6), 2,4-dichloro-5-{2-[4-(trifluoromethyl)phenyl]ethoxy}phenyl 2,2,2-trifluoroethyl sulfoxide (chemical name, CAS registry number: 1472052-11-1), 1,5-dimethyl-2-[(2,2,2-trifluoroethyl)sulfinyl]-4-[[6-[(trifluoromethyl)thio]hexyl]oxy]benzene (chemical name, CAS registry number: 1472050-34-2), 2-{2-fluoro-4-methyl-5-[(2,2,2-trifluoroethyl)sulfinyl]phenoxy}-5-(trifluoromethyl)pyridine (chemical name, CAS registry number: 1448758-62-0), 3-chloro-2-{2-fluoro-4-methyl-5-[(2,2,2-trifluoroethyl)sulfinyl]phenoxy}-5-(trifluoromethyl)pyridine (chemical name, CAS registry number: 1448761-28-1), 1-[(5,5-dimethylhexyl)oxy]-2-fluoro-4-methyl-5-[(2,2,2-trifluoroethyl)sulfinyl]benzene (chemical name, CAS registry number: 1472047-71-4), and NI-30 (code number).

When the herbicidal active ingredients are contained as the additional agrochemical active ingredient, one kind of the herbicidal active ingredients may be used alone, or any two or more kinds thereof may be used in combination. Examples of the herbicidal active ingredients include, but are not limited to, ioxynil, aclonifen, acrolein, azafenidin, acifluorfen (including salts with sodium, etc.), azimsulfuron, asulam, acetochlor, atrazine, anilofos, amicarbazone, amidosulfuron, amitrole, aminocyclopyrachlor, aminopyralid, amiprofos-methyl, ametryn, alachlor, alloxydim, isouron, isoxachlortole, isoxaflutole, isoxaben, isoproturon, ipfencarbazone, imazaquin, imazapic (including salts with amines, etc.), imazapyr (including salts such as isopropylamine), imazamethabenz-methyl, imazamox, imazethapyr, imazosulfuron, indaziflam, indanofan, eglinazine-ethyl, esprocarb, ethametsulfuron-methyl, ethalfluralin, ethidimuron, ethoxysulfuron, ethoxyfen-ethyl, ethofumesate, etobenzanid, endothal-disodium, oxadiazon, oxadiargyl, oxaziclomefone, oxasulfuron, oxyfluorfen, oryzalin, orthosulfamuron, orbencarb, oleic acid, cafenstrole, carfentrazone-ethyl, karbutilate, carbetamide, quizalofop-ethyl, quizalofop-P-ethyl, quizalofop-P-tefuryl, quinoclamine, quinclorac, quinmerac, cumyluron, clacyfos, glyphosate (including salts such as sodium, potassium, ammonium, amine, propylamine, isopropylamine, dimethylamine, and trimesium), glufosinate (including salts such as amines and sodium), glufosinate-P-sodium, clethodim, clodinafop-propargyl, clopyralid, clomazone, chlomethoxyfen, clomeprop, cloransulam-methyl, chloramben, chloridazon, chlorimuron-ethyl, chlorsulfuron, chlorthal-dimethyl, chlorthiamid, chlorphthalim, chlorflurenol-methyl, chlorpropham, chlorbromuron, chloroxuron, chlorotoluron, ketospiradox (including salts such as sodium, calcium, and ammonia), saflufenacil, sarmentine, cyanazine, cyanamide, diuron, diethatyl-ethyl, dicamba (including salts such as amines, diethylamine, isopropylamine, diglycolamine, sodium, and lithium), cycloate, cycloxydim, diclosulam, cyclosulfamuron, cyclopyranil, cyclopyrimorate, dichlobenil, diclofop-P-methyl, diclofop-methyl, dichlorprop, dichlorprop-P, diquat, dithiopyr, siduron, dinitramine, cinidon-ethyl, cinosulfuron, dinoseb, dinoterb, cyhalofop-butyl, diphenamid, difenzoquat, diflufenican, diflufenzopyr, simazine, dimethachlor, dimethametryn, dimethenamid, dimethenamid-P, simetryn, dimepiperate, dimefuron, cinmethylin, swep, sulcotrione, sulfentrazone, sulfosate, sulfosulfuron, sulfometuron-methyl, sethoxydim, terbacil, daimuron, thaxtomin A, dalapon, thiazopyr, tiafenacil, thiencarbazone (including sodium salts, methyl esters, etc.), tiocarbazil, thiobencarb, thidiazimin, thifensulfuron-methyl, desmedipham, desmetryne, tetflupyrolimet, thenylchlor, tebutam, tebuthiuron, tepraloxydim, tefuryltrione, tembotrione, terbuthylazine, terbutryn, terbumeton, topramezone, tralkoxydim, triaziflam, triasulfuron, triafamone, tri-allate, trietazine, triclopyr, triclopyr-butotyl, trifludimoxazin, tritosulfuron, triflusulfuron-methyl, trifluralin, trifloxysulfuron-sodium, tribenuron-methyl, tolpyralate, naptalam (including salts with sodium, etc.), naproanilide, napropamide, napropamide-M, nicosulfuron, neburon, norflurazon, vernolate, paraquat, halauxifen-benzyl, halauxifen-methyl, haloxyfop, haloxyfop-P, haloxyfop-etotyl, halosafen, halosulfuron-methyl, bixlozone, picloram, picolinafen, bicyclopyrone, bispyribac-sodium, pinoxaden, bifenox, piperophos, pyraclonil, pyrasulfotole, pyrazoxyfen, pyrazosulfuron-ethyl, pyrazolynate, bilanafos, pyraflufen-ethyl, pyridafol, pyrithiobac-sodium, pyridate, pyriftalid, pyributicarb, pyribenzoxim, pyrimisulfan, pyriminobac-methyl, pyroxasulfone, pyroxsulam, phenisopham, fenuron, fenoxasulfone, fenoxaprop (including methyl, ethyl, and isopropyl esters), fenoxaprop-P (including methyl, ethyl, and isopropyl esters), fenquinotrione, fenthiaprop-ethyl, fentrazamide, phenmedipham, butachlor, butafenacil, butamifos, butylate, butenachlor, butralin, butroxydim, flazasulfuron, flamprop (including methyl, ethyl, and isopropyl esters), flamprop-M (including methyl, ethyl, and isopropyl esters), primisulfuron-methyl, fluazifop-butyl, fluazifop-P-butyl, fluazolate, fluometuron, fluoroglycofen-ethyl, flucarbazone-sodium, fluchloralin, flucetosulfuron, fluthiacet-methyl, flupyrsulfuron-methyl-sodium, flufenacet, flufenpyr-ethyl, flupropanate, flupoxam, flumioxazin, flumiclorac-pentyl, flumetsulam, fluridone, flurtamone, fluroxypyr, flurochloridone, pretilachlor, procarbazone-sodium, prodiamine, prosulfuron, prosulfocarb, propaquizafop, propachlor, propazine, propanil, propyzamide, propisochlor, propyrisulfuron, propham, profluazol, propoxycarbazone-sodium, profoxydim, bromacil, brompyrazon, prometryn, prometon, bromoxynil (including esters of butyric acid, octanoic acid or heptanoic acid, etc.), bromofenoxim, bromobutide, florasulam, florpyrauxifen, hexazinone, pethoxamid, benazolin, penoxsulam, heptamaloxyloglucan, beflubutamid, beflubutamid-M, pebulate, pelargonic-acid, bencarbazone, pendimethalin, benzfendizone, bensulide, bensulfuron-methyl, benzobicyclon, benzofenap, bentazone, pentanochlor, pentoxazone, benfluralin, benfuresate, fosamine, fornesafen, foramsulfuron, mecoprop (including salts such as sodium, potassium, isopropylamine, triethanolamine and dimethylamine), mecoprop-P-potassium, mesosulfuron-methyl, mesotrione, metazachlor, metazosulfuron, methabenzthiazuron, metamitron, metamifop, DSMA (disodium methanearsonate), methiozolin, methyldymuron, metoxuron, metosulam, metsulfuron-methyl, metobromuron, metobenzuron, metolachlor, metribuzin, mefenacet, monosulfuron (including methyl, ethyl, and isopropyl esters), monolinuron, molinate, iodosulfuron, iodosulfulon-methyl-sodium, iofensulfuron, iofensulfuron-sodium, lactofen, lancotrione, linuron, rimsulfuron, lenacil, TCA (2,2,2-trichloroacetic acid) (including salts such as sodium, calcium, and ammonia), 2,3,6-TBA (2,3,6-trichlorobenzoic acid), 2,4,5-T (2,4,5-trichlorophenoxyacetic acid), 2,4-D (2,4-dichlorophenoxyacetic acid) (including salts such as amines, diethylamine, triethanolamine, isopropylamine, sodium, and lithium), ACN (2-amino-3-chloro-1,4-naphthoquinone), MCPA (2-methyl-4-chlorophenoxyacetic acid), MCPB (2-methyl-4-chlorophenoxybutyric acid) (including sodium salts, ethyl esters, etc.), 2,4-DB (4-(2,4-dichlorophenoxy)butyric acid), DNOC (4,6-dinitro-O-cresol) (including salts such as amines and sodium), AE-F-150944 (code number), HW-02 (code number), IR-6396 (code number), MCPA-thioethyl, SYP-298 (code number), SYP-300 (code number), EPTC (S-ethyl dipropyl thiocarbamate), S-metolachlor, S-9750 (code number), and MSMA (Monosodium methanearsonate).

When the plant growth regulatory active ingredients are contained as the additional agrochemical active ingredient, one kind of the plant growth regulatory active ingredients may be used alone, or any two or more kinds thereof may be used in combination. Examples of the plant growth regulatory active ingredients include, but are not limited to, 1-methylcyclopropene, 1-naphthylacetamide, 2,6-diisopropylnaphthalene, 4-CPA (4-chlorophenoxyacetic acid), benzylaminopurine, ancymidol, aviglycine, carvone, chlormequat, cloprop, cloxyfonac, cloxyfonac-potassium, cyclanilide, cytokinins, daminozide, dikegulac, dimethipin, ethephon, epocholeone, ethychlozate, flumetralin, flurenol, flurprimidol, pronitridine, forchlorfenuron, gibberellins, inabenfide, indole acetic acid, indole butyric acid, maleic hydrazide, mefluidide, mepiquat chloride, n-decanol, paclobutrazol, prohexadione-calcium, prohydrojasmon, sintofen, thidiazuron, triacontanol, trinexapac-ethyl, uniconazole, uniconazole-P, 4-oxo-4-(2-phenylethyl)aminobutyric acid (chemical name, CAS registry number: 1083-55-2), and calcium peroxide.

In the present embodiment, an oil which is a vegetable oil or a vegetable oil derivative is mixed in an agrochemical composition. The vegetable oil is not particularly limited, and examples thereof include soybean oil, rapeseed oil, olive oil, castor oil, sunflower oil, coconut oil, corn oil, cottonseed oil, linseed oil, palm oil, peanut oil, safflower oil, sesame oil, and tung oil. The oil that is a vegetable oil derivative is also not particularly limited. Examples of the vegetable oil derivative include vegetable oil fatty acid esters such as rapeseed oil fatty acid esters, castor oil fatty acid esters, and castor oil fatty acid glycerin esters, and acetylated castor oils. The vegetable oil fatty acid esters may be a mixture or an ester of one fatty acid constituting the vegetable oil. Examples of fatty acid esters include methyl oleate, methyl linoleate, and methyl linolenate. Among these, castor oil or castor oil derivatives are particularly preferred. Furthermore, an oil having a viscosity at 20°C in the range of 300 mPa·s to 1000 mPa·s is also preferable.

The mixing ratio of the oil which is a vegetable oil or a vegetable oil derivative is not particularly limited, and is usually in the range of 1 mass% to 10 mass%, and preferably in the range of 2 mass% to 8 mass% in the agrochemical composition.

The agrochemical composition of the present embodiment may optionally contain an adjuvant such as a surfactant, an emulsifier, a thickener, a pH adjuster, an antifreezing agent, an antifoaming agent, an antiseptic, and a colorant.

As the surfactant, any surfactant may be used as long as it is used in the relevant technical field or the like. Examples of the surfactant include alkyl sulfates, dialkyl sulfosuccinates, alkyl aryl sulfonates, polyoxyalkylene (POA) allylphenyl ethers, POA allylphenyl ether sulfates, POA alkyl ethers, POA castor oils, POA hydrogenated castor oils, POA sorbitan fatty acid esters, POA sorbitol fatty acid esters, formalin condensates of alkyl naphthalene sulfonates, lignin sulfonates, and polycarboxylates. If necessary, these may be mixed and used.

As the emulsifier, the above surfactants also act as an emulsifier, and for example, a water-soluble natural polymer such as gum arabic may be mixed as an emulsifier. When the emulsifier is mixed, the mixing ratio is not particularly limited, and is usually in the range of 1 mass% to 8 mass%, preferably 1 mass% to 5 mass% in the composition. Excessive mixing of the emulsifier may increase the viscosity of the composition, and thus it is preferable to keep the mixing ratio within the range described above.

Examples of the thickener include natural polysaccharides such as xanthan gum, guar gum, tamarind gum, and pectin, and fine powders of mineral substances such as white carbon, talc, bentonite, and clay. As the thickener, any substances known as a thickener may be used alone or in combination of two or more thereof. When the thickener is mixed, the range of the mixing ratio is not particularly limited, and a suitable range varies depending on selection of the thickener. In the present embodiment, the thickener is mixed for the purpose of adjusting the viscosity of the agrochemical composition to a preferred viscosity range. The preferred viscosity range of the agrochemical composition of the present embodiment is about 100 mPa·s to 1000 mPa·s, and more preferably about 200 mPa·s to 800 mPa·s under measurement conditions of a rotational speed of 30 rpm and 20°C in the measurement using a B-type viscometer. The thickener may be mixed in an amount such that the viscosity of the agrochemical composition falls within this range. Those skilled in the art can easily know such an appropriate mixing amount by performing a simple experiment, that is, an experiment in which a thickener is added to an agrochemical composition in a stepwise manner.

Examples of the pH adjuster include acidic substances such as sulfuric acid, citric acid, and potassium dihydrogen phosphate, basic substances such as sodium hydroxide, calcium carbonate, and disodium hydrogen phosphate, and a mixture of a weak acid and a conjugate base thereof or a mixture of a weak base and a conjugate acid thereof, which exhibits a buffering capacity in an aqueous solution. As the pH adjuster, any substances known as a pH adjuster may be used alone or in combination of two or more thereof.

Examples of the antifreezing agent include water-soluble substances having a relatively low molecular weight, such as urea and salt, and water-soluble polyhydric alcohols, such as propylene glycol, ethylene glycol, diethylene glycol, and glycerin. As the antifreezing agent, any substances known as an antifreezing agent may be used alone or in combination of two or more thereof.

Examples of the antifoaming agent include silicone-based antifoaming agents such as polyalkylpolysiloxanes and polyphenylpolysiloxanes, fatty acids such as myristic acid, and metal salts of fatty acids such as sodium stearate. Any known antifoaming agent may be used alone or in combination of two or more thereof.

Examples of the antiseptic include derivatives of isothiazolin-3-one such as methylisothiazolinone, chloromethylisothiazolinone, and benzoisothiazolinone, 2-bromo-2-propane-1,3-diol, bronopol, sorbate, paraben, benzoic acid or salts thereof. As the antiseptic, any substances known as antiseptic may be used alone or in combination of two or more thereof.

Examples of the colorant include Rhodamine B, C.I. Pigment Red 112, C.I. Solvent Red 1, Pigment Blue 15:4, Pigment Blue 15:3, Pigment Blue 15:2, Pigment Blue 15:1, Pigment Blue 80, Pigment Yellow 1, Pigment Yellow 13, Pigment Red 112, Pigment Red 48:2, Pigment Red 48:1, Pigment Red 57:1, Pigment Red 53:1, Pigment Orange 43, Pigment Orange 34, Pigment Orange 5, Pigment Green 36, Pigment Green 7, Pigment White 6, Pigment Brown 25, Basic Violet 10, Basic Violet 49, Acid Red 51, Acid Red 52, Acid Red 14, Acid Blue 9, Acid Yellow 23, Basic Red 10, and Basic Red 108. As the colorant, any substances known as colorant may be used alone or in combination of two or more thereof.

Furthermore, the agrochemical composition of the present embodiment may optionally contain a toxicity reducing agent. When the toxicity reducing agent is contained, the mixing amount and the mixing ratio can be appropriately set by those skilled in the art. One kind of toxicity reducing agent may be used alone, or any two or more kinds thereof may be used in combination. Examples of the toxicity reducing agent include, but are not limited to, benoxacor, furilazole, dichlormid, dicyclonone, DKA-24 (N1,N2-diallyl-N2-dichloroacetylglycinamide), AD-67 (4-dichloroacetyl-1-oxa-4-azaspiro[4.5]decane), PPG-1292(2,2-dichloro-N-(1,3-dioxan-2-ylmethyl)-N-(2-propenyl)acetamide), R-29148 (3-dichloroacetyl-2,2,5-trimethyl-1,3-oxazolidine), cloquintocet-mexyl, 1,8-Naphthalic Anhydride, mefenpyr-diethyl, mefenpyr, mefenpyr-ethyl, fenchlorazole-O-ethyl, fenclorim, MG-191 (2-dichloromethyl-2-methyl-1,3-dioxane), cyometrinil, flurazole, fluxofenim, isoxadifen, isoxadifen-ethyl, MON4660 (code number), oxabetrinil, cyprosulfamide, lower alkyl substituted benzoic acids, TI-35 (code number) or N-(2-methoxybenzoyl)-4-[(methylaminocarbonyl)amino]benzenesulfonamide (chemical name, CAS registry number: 129531-12-0).

The agrochemical active ingredient, such as dichlobentiazox, and the oil, which is a vegetable oil or a vegetable oil derivative, may be separated and precipitated during storage, and thus it is desirable to atomize the agrochemical active ingredient and the oil. Examples of the method for atomizing the agrochemical active ingredient include a method in which the agrochemical active ingredient, the surfactant, water, and any other ingredients as desired are mixed with each other in predetermined amounts, and the mixture is stirred at a high speed with a grinding media such as glass beads, ceramic beads, and stainless steel beads, followed by wet pulverization. Alternatively, the agrochemical active ingredient may be subjected to dry pulverization by means of impact pulverization, airflow pulverization, or the like. As a method for atomizing the oil which is a vegetable oil or a vegetable oil derivative, fine particles can be obtained by performing high-speed shearing by the above-described wet pulverization. In addition, the oil which is a vegetable oil or a vegetable oil derivative, an emulsifier, water, or the like may be mixed in predetermined amounts, and the mixture may be atomized using a homogenizer or the like. The agrochemical composition of the present embodiment may be obtained by mixing an agrochemical active ingredient, an oil which is a vegetable oil or a vegetable oil derivative, and water, and simultaneously performing the above-described atomization on the mixture, or may be obtained by mixing respective atomized slurries.

When any of the production methods described above is adopted, the particle size of the agrochemical active ingredient particles after pulverization in the agrochemical composition is not particularly limited, and is preferably about 0.2 µm to 10 µm, and more preferably about 0.5 µm to 6 µm in terms of the volume median diameter. In the agrochemical composition, the particle size of the oil which is a vegetable oil or a vegetable oil derivative is not particularly limited either, and is preferably about 0.05 µm to 100 µm, and more preferably about 0.1 µm to 50 µm in terms of the volume median diameter. The volume median diameter of the particles can be measured by, for example, a measuring apparatus using a laser diffraction method as a measurement principle.

In addition, in general, when the viscosity of an aqueous suspension formulation is extremely low, the liquid phase separation during storage becomes remarkable, and on the other hand, when the viscosity is extremely high, it becomes difficult to discharge and stir the aqueous suspension formulation from the bottle during use. Therefore, in the case where the agrochemical composition of the present embodiment is an aqueous suspension formulation, a preferred viscosity range of the agrochemical composition of the present embodiment which has reduced liquid phase separation during storage and is easily discharged from a bottle in the use situation is about 100 mPa·s to 1000 mPa·s and more preferably about 200 mPa·s to 800 mPa·s under the measurement conditions of a rotational speed of 30 rpm and 20°C in the measurement using a B-type viscometer.

The agrochemical composition of the present embodiment obtained as described above can be diluted with water and then applied to surfaces of seeds of a useful plant. The seeds treated with the agrochemical composition of the present embodiment have a strong force of supporting the agrochemical active ingredient on the surfaces thereof, and the agrochemical active ingredient is less likely to peel off after the treatment. Therefore, an operator is less likely to be exposed to dust of the peeled agrochemical active ingredient. Therefore, the agrochemical composition of the present embodiment can be used as a seed treatment agent.

The degree of peeling-off of the agrochemical active ingredient from the seed surfaces treated with the agrochemical composition can be evaluated by any method as long as it is rational, and a Heubach method can be mentioned as a representative evaluation method. The Heubach method is an evaluation method as the industry standard defined by European seed association, in which airborne dust and worn particles of the treated seeds are recognized as parameters of the quality of the treated seeds. The outline of the Heubach method is to suck dust generated by rolling seeds in a container equipped with three blades, cause the dust to be adsorbed on a filter, and calculate the adsorbed dust by weight.

In the seeds treated with the agrochemical composition of the present embodiment, the amount of dust generated from the rolled seeds is smaller than the amount of dust generated from the seeds similarly treated with a control composition containing water instead of oil. The degree of reduction is not particularly limited, and the amount of dust generated when the seeds of the useful plant treated with the water-diluted solution of the agrochemical composition of the present embodiment are rolled is usually 75 mass% or less, preferably 60 mass% or less, of the amount of dust generated when the seeds treated with the control composition are rolled.

The agrochemical composition of the present embodiment has achieved an object of preventing dust containing an agrochemical active ingredient from peeling off from seeds treated with the agrochemical composition. Therefore, it is not necessary to mix a water-soluble synthetic polymer, which is a related technique for preventing dust generation. Mixing of the water-soluble synthetic polymer promotes decomposition of dichlobentiazox, so that it is rather preferable not to mix the water-soluble synthetic polymer.

For some reason, when a water-soluble synthetic polymer is mixed with the agrochemical composition of the present invention, mixing of the water-soluble synthetic polymer can be allowed as long as the stability of dichlobentiazox is not impaired, and the amount of the water-soluble synthetic polymer is preferably as small as possible. An allowable mixing ratio is about less than 1 mass%, and most preferably 0 mass% in the composition. That is, it is most preferable that the agrochemical composition of the present embodiment does not contain a water-soluble synthetic polymer at all.

The agrochemical composition of the present embodiment is used for the treatment of seeds of a useful plant before seeding, so that it is possible to prevent occurrence of plant diseases in a subsequent cultivation process of the useful plant. That is, a method for controlling crop diseases of the present embodiment includes treating seeds of a useful plant with the agrochemical composition of the present embodiment before seeding, and prevents diseases in the subsequent cultivation process of the useful plant. As a method for treating seeds with the agrochemical composition of the present embodiment, for example, there is a method in which the agrochemical composition is diluted with water, the diluted solution and the seeds are mixed and stirred, and then only the seeds are taken out and dried. The method for treating seeds with the agrochemical composition of the present embodiment is not limited thereto, and a known seed treatment technique can be applied.

In addition, seeds of a useful plant which are obtained by being treated with the agrochemical composition of the present embodiment and then volatilizing water in the agrochemical composition fall within the present embodiment. That is, dichlobentiazox and the oil which is a vegetable oil or a vegetable oil derivative are supported by surfaces of the seeds of the useful plant of the present embodiment. It should be noted that, in addition to dichlobentiazox and the oil which is a vegetable oil or a vegetable oil derivative, a trace amount of water may be supported by the surfaces of the seeds of the useful plant of the present embodiment. The water supported by the surfaces of the seeds of the useful plant of the present embodiment is, for example, water derived from the agrochemical composition or a diluted solution thereof, but is not limited to this example.

### EXAMPLES

Hereinafter, the present invention will be described in detail with reference to Examples and Test Examples, but the present invention is not limited to these Examples and the like. In the following Examples, the term "part(s)" refers to part(s) by mass. The viscosity was measured using a B-type viscometer under the conditions of a rotational speed of 30 rpm and 20°C. The viscosity, which does not satisfy a measurement limit (10 mPa·s), was expressed as being less than 10 mPa·s.

### [Example 1]

22.29 parts of dichlobentiazox, 1.24 parts of a POA allyl phenyl ether sulfate sodium salt, 0.55 parts of an alkylnaphthalenesulfonic acid formaldehyde condensate sodium salt, 0.64 parts of citric acid monohydrate, 1.20 parts of disodium hydrogenphosphate dodecahydrate, 0.05 parts of xanthan gum, 0.08 parts of bentonite, 0.16 parts of dimethylpolysiloxane, 0.03 parts of a mixture of methylisothiazolinone, chloromethylisothiazolinone, and 2-bromo-2-propane-1,3-diol (trade name: "Biohope L", manufactured by K.I Chemical Industry Co., LTD.), and 25.06 parts of water were mixed and subjected to wet pulverization to obtain a pulverized slurry (A). With 51.30 parts of the pulverized slurry (A), 0.02 parts of "Biohope L" (trade name), 4.00 parts of gum arabic, 4.00 parts of castor oil (viscosity: 944 mPa·s), and 40.68 parts of water were mixed, and the mixture was stirred and emulsified to obtain the inventive composition (1).

### [Example 2]

The inventive composition (2) was obtained in the same manner as in Example 1 except that acetylated castor oil (trade name "Ric-Cizer GR-301", viscosity: 321 mPa·s) was used instead of castor oil.

### [Example 3]

The inventive composition (3) was obtained in the same manner as in Example 1 except that cottonseed oil (viscosity: 72 mPa·s) was used instead of castor oil.

### [Example 4]

The inventive composition (4) was obtained in the same manner as in Example 1 except that rapeseed oil (viscosity: 102 mPa·s) was used instead of castor oil.

### [Example 5]

The inventive composition (5) was obtained in the same manner as in Example 1 except that sunflower oil (viscosity: 97 mPa.s) was used instead of castor oil.

### [Example 6]

The inventive composition (6) was obtained in the same manner as in Example 1 except that soybean oil (viscosity: 67 mPa·s) was used instead of castor oil.

### [Comparative Example 1]

A comparative composition (1) was obtained in the same manner as in Example 1 except that normal paraffin (viscosity: less than 10 mPa.s) was used instead of castor oil.

### [Comparative Example 2]

With 51.30 parts of the pulverized slurry (A) of Example 1, 0.02 parts of "Biohope L" (trade name), 4.00 parts of gum arabic, 4.00 parts of polyvinyl alcohol, and 40.68 parts of water were mixed, and the mixture was stirred until "Biohope L", gum arabic and polyvinyl alcohol dissolve in water to obtain a comparative composition (2).

### [Comparative Example 3]

With 51.30 parts of the pulverized slurry (A) of Example 1, 0.02 parts of "Biohope L" (trade name), 4.00 parts of gum arabic, 4.00 parts of polyvinyl pyrrolidone, and 40.68 parts of water were mixed, and the mixture was stirred until "Biohope L", gum arabic and polyvinyl pyrrolidone dissolve in water to obtain a comparative composition (3).

### [Reference Example 1]

With 51.30 parts of the pulverized slurry (A) of Example 1, 0.02 parts of "Biohope L" (trade name), 4.00 parts of gum arabic, and 44.68 parts of water were mixed, and the mixture was stirred until "Biohope L" and gum arabic dissolve in water to obtain a control composition (1).

### [Test Example 1]

Contents of dichlobentiazox immediately after the preparation of the inventive compositions (1) to (6), the comparative compositions (1) to (3) and the control composition (1) were quantified using a high-performance liquid chromatograph. Thereafter, each composition was allowed to stand and stored at a constant temperature of 54°C, and the content of dichlobentiazox after 14 days was quantified using a high-performance liquid chromatograph to determine a decomposition rate of dichlobentiazox during the test. The results are shown in Table 1. In the table, the evaluation "A" means that the decomposition rate is equal to or lower than that of the control composition, and the evaluation "B" means that the decomposition rate is higher than that of the control composition.

**[Table 1]**

| Composition | Decomposition rate | Evaluation |
|---|---|---|
| Inventive composition (1) | 4.6% | A |
| Inventive composition (2) | 3.8% | A |
| Inventive composition (3) | 3.9% | A |
| Inventive composition (4) | 4.4% | A |
| Inventive composition (5) | 4.2% | A |
| Inventive composition (6) | 3.9% | A |
| Comparative composition (1) | 4.1% | A |
| Comparative composition (2) | 5.1% | B |
| Comparative composition (3) | 7.1% | B |
| Control composition (1) | 4.8% | |

It can be seen that decomposition of dichlobentiazox in the inventive compositions (1) to (6) to which the oil which is a vegetable oil or a vegetable oil derivative was added and the comparative composition (1) to which normal paraffin was added is equivalent to or less than that of the control composition (1) to which only water was added. On the other hand, in the comparative compositions (2) and (3) to which the water-soluble synthetic polymer was added, decomposition of dichlobentiazox tended to be relatively promoted.

### [Example 7]

22.29 parts of dichlobentiazox, 1.24 parts of a POA allyl phenyl ether sulfate sodium salt, 0.55 parts of an alkylnaphthalenesulfonic acid formaldehyde condensate sodium salt, 0.64 parts of citric acid monohydrate, 1.20 parts of disodium hydrogenphosphate dodecahydrate, 0.05 parts of xanthan gum, 0.08 parts of bentonite, 0.16 parts of dimethylpolysiloxane, 0.03 parts of "Biohope L" (trade name), and 25.06 parts of water were mixed and subjected to wet pulverization to obtain a pulverized slurry (B). With the pulverized slurry (B), 4.0 parts of castor oil (viscosity: 944 mPa·s) and 44.70 parts of water were mixed, and the inventive composition (7) was obtained.

### [Example 8]

The inventive composition (8) was obtained in the same manner as in Example 7 except that "Ric-Cizer GR-301" (trade name) (viscosity: 321 mPa.s) was used instead of castor oil.

### [Example 9]

The inventive composition (9) was obtained in the same manner as in Example 7 except that rapeseed oil (viscosity: 102 mPa·s) was used instead of castor oil.

### [Example 10]

The inventive composition (10) was obtained in the same manner as in Example 7 except that sunflower oil (viscosity: 97 mPa·s) was used instead of castor oil.

### [Comparative Example 4]

A comparative composition (4) was obtained in the same manner as in Example 7 except that normal paraffin (viscosity: less than 10 mPa·s) was used instead of castor oil.

### [Reference Example 2]

With the pulverized slurry (B), 48.70 parts of water was mixed, and a control composition (2) was obtained.

### [Test Example 2]

The inventive compositions (7) to (10), the comparative composition (4) and the control composition (2) were diluted 5 times with tap water, and were used for a seed treatment of wheat seeds (variety: Kitahomare). The seed treatment was carried out by putting 100 g of wheat seeds into a plastic bag, then adding 1.05 mL of a diluent with a micropipette, and vigorously stirring the mixture. All seed treatments were carried out on the same day, and the treated seeds were stored in a plastic bag at 20°C for 13 days.

The amount of dust generated from the seeds subjected to the seed treatment was measured by the Heubach method. Specifically, 100 g of seeds subjected to the seed treatment were put into a dust meter (device name: "DUSTMETER Type I", manufactured by Heubach DUSTMETER GmbH) and were rolled under the conditions of a rotational speed of 30 rpm and a rotation time of 120 seconds to generate dust, the dust was sucked at a suction amount of 20 L/min and was adsorbed onto filter paper, followed by measuring the weight of the dust adsorbed onto the filter paper, and a value obtained by multiplying the measured value by 1000 was defined as the amount of dust generated per 100 kg of seeds. The results are shown in Table 2.

**[Table 2]**

| | Dust amount (g/100 kg seeds) |
|---|---|
| Inventive composition (7) | 1.46 (58% of Control Composition (2)) |
| Inventive composition (8) | 1.34 (53% of Control Composition (2)) |
| Inventive composition (9) | 1.76 (70% of Control Composition (2)) |
| Inventive composition (10) | 1.72 (68% of Control Composition (2)) |
| Comparative Composition (4) | 2.11 (84% of Control Composition (2)) |
| Control Composition (2) | 2.52 |

As compared with the control composition (2) to which only water was added and the comparative composition (4) to which normal paraffin was added, it can be seen that the inventive compositions (7) to (10) all prevent the amount of dust generation.

### [Example 11]

33.64 parts of dichlobentiazox, 0.75 parts of a POA allyl phenyl ether sulfate sodium salt, 2.0 parts of an alkylnaphthalenesulfonic acid formaldehyde condensate sodium salt, 1.25 parts of citric acid monohydrate, 2.34 parts of disodium hydrogenphosphate dodecahydrate, 0.1 parts of dimethylpolysiloxane, 0.05 parts of a mixture of methylisothiazolinone, chloromethylisothiazolinone and 2-bromo-2-propane-1,3-diol (trade name: "Biohope L", manufactured by K.I Chemical Industry Co., LTD.), and 25.24 parts of water were mixed and subjected to wet pulverization to obtain a pulverized slurry (C). Next, 2.0 parts of an alkylnaphthalenesulfonic acid formaldehyde condensate sodium salt, 0.2 parts of bentonite, 0.2 parts of dimethylpolysiloxane, 3.0 parts of gum arabic, 6.4 parts of castor oil (viscosity: 944 mPa·s), and 22.83 parts of water were mixed and emulsified by a homogenizer to obtain a diluent (D). The pulverized slurry (C) and the diluent (D) were mixed to obtain the inventive composition (11).

### [Comparative Example 5]

2.0 parts of an alkylnaphthalenesulfonic acid formaldehyde condensate sodium salt, 0.2 parts of bentonite, 0.2 parts of dimethylpolysiloxane, 3.0 parts of gum arabic, 6.4 parts of polyvinyl alcohol, and 22.83 parts of water were mixed to obtain a diluent (E). The pulverized slurry (C) of Example 11 and the diluent (E) were mixed to obtain a comparative composition (5).

### [Test Example 3]

The viscosities of the obtained inventive composition (11) and the obtained comparative composition (5) were measured. The viscosities were measured using a B-type viscometer (device name "VISCOMETER TVB-10M", manufactured by Toki Sangyo Co., Ltd.) with spindle No. M2 or No. M3, at a rotational speed of 30 rpm, and 20°C. The results of viscosity measurement of the inventive composition (11) and the comparative composition (5) are shown in Table 3.

**[Table 3]**

| Measurement items | Inventive composition (11) | Comparative composition (5) |
|---|---|---|
| Viscosity (mPa·s) | 568 | 1733 |

From Table 3 above, it can be seen that the inventive composition (11) containing castor oil has a viscosity suitable for use, but the comparative composition (5) containing polyvinyl alcohol is so viscous that it is difficult to use.

The present application focuses on the priority based on Japanese Patent Application No. 2021-177425 filed on October 29, 2021.

## Claims

1. An aqueous suspension agrochemical composition comprising dichlobentiazox, an oil which is a vegetable oil or a vegetable oil derivative, and water.

2. The composition according to claim 1, wherein the oil is castor oil or a castor oil derivative.

3. The composition according to claim 1 or 2, wherein the oil has a viscosity at 20°C of 300 mPa·s to 1000 mPa·s.

4. The composition according to any one of claims 1 to 3, wherein dichlobentiazox is contained in an amount of 20 mass% to 55 mass%.

5. The composition according to any one of claims 1 to 4, wherein the oil is contained in an amount of 2 mass% to 8 mass%.

6. The composition according to any one of claims 1 to 5, which has a viscosity at 20°C of 200 mPa·s to 800 mPa·s.

7. The composition according to any one of claims 1 to 6, wherein a water-soluble synthetic polymer is not contained at all, or a total content of the water-soluble synthetic polymer is less than 1 mass%.

8. The composition according to any one of claims 1 to 7, further comprising gum arabic.

9. The composition according to any one of claims 1 to 8, which is a seed treatment agent.

10. The composition according to claim 9, wherein an amount of dust generated when seeds of a useful plant which are treated with a water-diluted solution of the aqueous suspension agrochemical composition are rolled is 75 mass% or less of an amount of dust generated when seeds treated with a water-diluted solution of a control composition containing water instead of oil are rolled.

11. A disease control method comprising: treating surfaces of seeds of a useful plant with an aqueous suspension agrochemical composition containing dichlobentiazox, an oil which is a vegetable oil or a vegetable oil derivative, and water, wherein occurrence of a disease in a subsequent cultivation process of the useful plant is prevented.

12. A seed of a useful plant, the seed having a surface on which dichlobentiazox and an oil which is a vegetable oil or a vegetable oil derivative are supported.
